**Europäisches Patentamt**

**European Patent Office**

**Office européen des brevets**

(19)

(11) Veröffentlichungsnummer : **0 359 904 B1**

(12) # EUROPÄISCHE PATENTSCHRIFT

(45) Veröffentlichungstag der Patentschrift :
26.02.92 Patentblatt 92/09

(51) Int. Cl.$^5$ : **A01D 21/04**

(21) Anmeldenummer : **89108275.2**

(22) Anmeldetag : **09.05.89**

(54) **Mehrreihiger Kartoffelschubroder.**

(30) Priorität : **21.09.88 DE 8811945 U**

(43) Veröffentlichungstag der Anmeldung :
**28.03.90 Patentblatt 90/13**

(45) Bekanntmachung des Hinweises auf die
Patenterteilung :
**26.02.92 Patentblatt 92/09**

(84) Benannte Vertragsstaaten :
**DE ES FR GB IT NL**

(56) Entgegenhaltungen :
**DE-A- 3 631 969**
**FR-A- 2 045 396**

(73) Patentinhaber : **MASCHINENFABRIK
NIEWÖHNER GMBH & CO. KG
Immelstrasse 170
W-4830 Gütersloh 11 (DE)**

(72) Erfinder : **Pickert, Heinz
Delbrücker Strasse 327
W-4835 Rietberg 1 (DE)**

(74) Vertreter : **Patentanwälte Dipl.-Ing. Bodo
Thielking Dipl.-Ing. Otto Elbertzhagen
Gadderbaumer Strasse 20
W-4800 Bielefeld 1 (DE)**

EP 0 359 904 B1

**Beschreibung**

Die Erfindung betrifft einen mehrreihigen Kartoffelschubroder mit Rodeeinrichtung und mit Abstand nebeneinander angeordneten Krautketten sowie mit Siebketten, ferner mit Quertransporteinrichtungen zum Abführen der Kartoffeln in der Mitte zwischen den Krautketten sowie mit mindestens einer Quertransporteinrichtung zum Ableiten des Kartoffelkrauts seitlich neben die Abwurfsstelle der Kartoffeln.

Bei einem bekannten Kartoffelschubroder dieser Art (DE 36 31 969 A 1) schließt sich an die Rodeeinrichtung eine Siebkette an, welche Kartoffeln und Kartoffelkraut gemeinsam nach hinten fördert. Von dieser Siebkette werden Kartoffeln und Kartoffelkraut auf zwei seitlich angeordnete Krautketten übergeben, zwischen denen in der Mitte der Maschine eine Gasse freigelassen ist. Eine Leiteinrichtung sorgt dafür, daß das von der Siebkette ankommende Erntegut auf die beiden seitlich angeordneten Krautbänder übergeleitet wird. Die Krautbänder umschließen zwei in gleicher Weise mit Abstand voneinander angeordnete Siebketten, welche die vom Kartoffelkraut getrennten Kartoffeln nach hinten auf zwei gegenläufig zum Zentrum fördernde Querförderbänder abgeben. Die Kartoffeln werden von diesen Querförderbändern in der Mitte der Maschine abgeworfen.

Bei der bekannten Vorrichtung ist es nachteilig, daß das Erntegut zunächst über eine Siebkette geführt werden muß und erst im hinteren Bereich der Maschine auf eine Krautkette übergeben werden kann. Ein weiterer Nachteil der bekannten Vorrichtung liegt darin, daß bei der bekannten Lösung ein mittlerer Krautkettenbereich vollständig fehlt. Wegen des Fehlens der Krautkette im mittleren Bereich kann der mittlere Abstand zwischen den Krautketten und den davon umschlungenen Siebketten nicht beliebig groß gewählt werden. Dies erweist sich als nachteilig insbesondere für Roder mit hohen Ernteleistungen, also beispielsweise für vierreihige Roder.

Ausgehend von diesem Stand der Technik liegt der Erfindung die Aufgabe zugrunde, einen Kartoffelschubroder der als bekannt vorausgesetzten Art so auszubilden, daß er gute Ernte- und Trennleistungen aufweist und gleichzeitig auch genügend Platz zum Abwurf der geernteten Kartoffeln im Zentrum der Maschine, welches dem Zentrum des Schubschleppers entspricht, bietet.

Die Lösung dieser Aufgabe erfolgt erfindungsgemäß dadurch, daß die mit Abstand nebeneinander angeordneten Krautketten die Siebketten sowie die Quertransporteinrichtung zum Abführen der Kartoffeln umschlingen, und daß die in Fahrtrichtung mit Abstand nebeneinander angeordneten Krautketten V-förmig von vorn nach hinten unter Bildung einer Abwurfgasse für die abzuführenden Kartoffeln am hinteren Ende, auseinanderlaufen.

Bei einer bevorzugten Ausführungsform der Erfindung sind die Siebketten in Draufsicht gesehen, ebenfalls V-förmig angeordnet.

Es hat sich ferner als zweckmäßig erwiesen, daß die benachbarten Krautketten über gleiche Antriebe mit dem Winkel zueinander angeordneten Antriebswellen angetrieben sind.

Schließlich erweist es sich als zweckmäßig, daß die Quertransporteinrichtungen zum Abführen der Kartoffeln unterhalb der hinteren Enden der Siebketten angeordnet, zur Abwurfgasse fördernde Quertransportbänder sind.

Die erfindungsgemäße Lösung führt zu einer saubereren und einwandfreien Trennung zwischen Kartoffelkraut und Kartoffeln bei einer besonders schonenden Behandlung der Kartoffeln. Außerdem schafft sie auch bei Maschinen mit großen Ernteleistungen, also beispielsweise Kartoffelschubrodern mit vier und mehr Reihen, ausreichend Platz für einen Abwurf der geernteten Kartoffeln in einen mittleren Kartoffelschwad.

Nachstehend wird eine bevorzugte Ausführungsform der Erfindung anhand der Zeichnung im einzelnen beschrieben. Es zeigen:

Figur 1 - eine schematische Seitenansicht des Kartoffelschubroders mit Schubschlepper,

Figur 2 - eine Draufsicht auf die Vorrichtung gemäß Figur 1.

Ein Schubschlepper 1 besitzt Geräteträger 2, an die der vierreihige Kartoffelschubroder angehängt ist. Dieser Kartoffelschubroder besitzt vier im Abstand der Kartoffelreihen angeordnete Rodeeinrichtungen, von denen zwei mit 4 und die restlichen beiden mit 14 bezeichnet sind. Von den Rodeeinrichtungen sind in der Zeichnung vor allem die Dammrollen erkennbar. Hinter den Dammrollen sind in bekannter Weise Rodeschare vorgesehen.

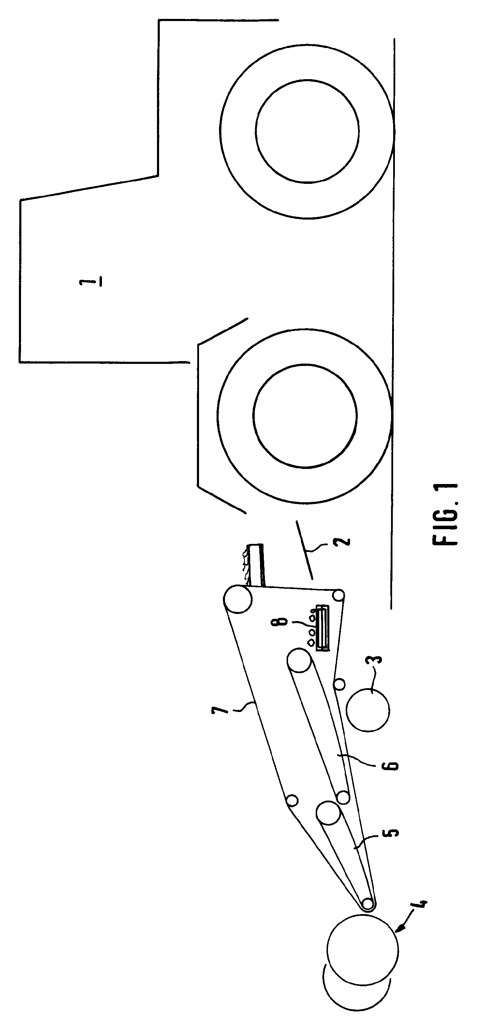

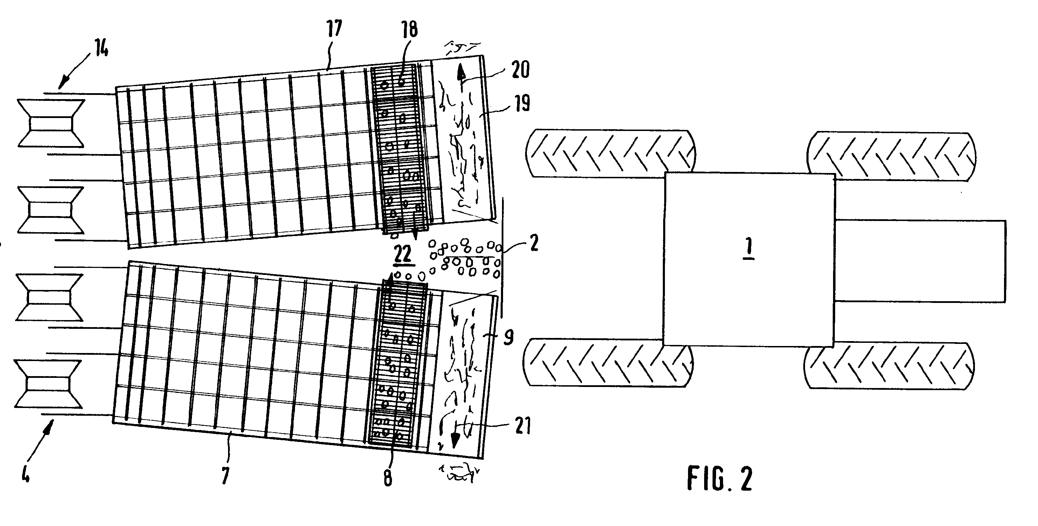

Die von den Rodescharen aufgegrabenen, aus Kartoffelkraut und Kartoffeln bestehenden Stauden gelangen von den beiden Rodeeinrichtungen 4 auf die Krautkette 7 und von den Rodeeinrichtungen 14 auf die Krautkette 17. In der Draufsicht gemäß Figur 2 ist erkennbar, daß die Krautketten 7 und 14 V-förmig von vorn nach hinten auseinanderlaufen. Sie bilden an ihrem hinteren Ende eine ausreichend große Abwurfgasse 22 für die Kartoffeln. Die beiden Krautketten 7 und 17 umschlingen jeweils Siebketten und Quertransportbänder. In Figur 1 sind lediglich zwei hintereinander angeordnete Siebketten 5 und 6 angeordnet, welche die darauf gelangenden Kartoffeln bis zum Querförderband 8 fördern. In entsprechender Weise sind, ebenfalls schräg nach hinten und zur Seite verlaufend, innerhalb der Krautkette 17 zwei Siebketten angeordnet, die in den Zeichnungen nicht dargestellt sind. Diese beiden, nicht dargestellten Siebketten fördern die Kartoffeln auf ein Quertransportband 18. Die beiden Quertransportbänder 8 und 18 werfen die Kartoffeln in der mittleren Gasse 22 ab. Das Kartoffelkraut gelangt von den Krautbändern 7 und 17 über die obere hintere Umlenkwalze auf die beiden Quertransporteinrichtungen 9 und 19, welche in Form von Querförderbändern ausgebildet sind und das Kartoffelkraut in Richtung der Pfeile 20 und 21 seitlich neben der Maschine abwerfen.

## Patentansprüche

1. Mehrreihiger Kartoffelschubroder mit Rodeeinrichtung (4; 14) und mit Abstand nebeneinander angeordneten Krautketten (7; 17) sowie mit Siebketten (5; 6) ferner mit Quertransporteinrichtungen (8; 18) zum Abführen der Kartoffeln in der Mitte zwischen den Krautketten (7; 17) sowie mit mindestens einer Quertransporteinrichtung (9; 19) zum Ableiten des Kartoffelkrauts seitlich neben die Abwurfstelle der Kartoffeln, dadurch gekennzeichnet, daß die mit Abstand nebeneinander angeordneten Krautketten (7; 17) die Siebketten (5; 6) sowie die Quertransporteinrichtung (8; 18) zum Abführen der Kartoffeln umschlingen und daß die in Fahrtrichtung mit Abstand nebeneinander angeordneten Krautketten (7; 17) V-förmig von vorn nach hinten, unter Bildung einer Abwurfgasse (22) für die abzuführenden Kartoffeln am hinteren Ende, auseinanderlaufen.

2. Mehrreihiger Kartoffelschubroder nach Anspruch 1, dadurch gekennzeichnet, daß die Siebketten (5; 6), in Draufsicht gesehen, ebenfalls V-förmig angeordnet sind.

3. Mehrreihiger Kartoffelschubroder nach Anspruch 1 oder 2, dadurch gekennzeichnet, daß die benachbarten Krautketten (7; 17) über gleiche Antriebe mit im Winkel zueinander angeordneten Antriebswellen angetrieben sind.

4. Mehrreihiger Kartoffelschubroder nach einem oder mehreren der Ansprüche 1 bis 3, dadurch gekennzeichnet, daß die Quertransporteinrichtungen zum Abführen der Kartoffeln unterhalb der hinteren Enden der Siebketten (6) angeordnete, zur Abwurfgasse (22) fördernde Quertransportbänder sind.

## Claims

1. Multi-row potato harvester with lifting device (4,14) and haulm chains (7;17) spaced out next to each other as well as with open-web chains (5;6), furthermore with transverse conveyor devices (8;18) for discharging the potatoes in the middle between the haulm chains (7;17) as well as with at least one transverse conveyor device (9;19) for directing the haulm sideways next to the discharge point of the potatoes,, characterised in that the haulm chains (7;17) set spaced out side by side loop round the open-web chains (5,6) and the transverse conveyor device (8;18) for discharging the potatoes and that the haulm chains (7;17) mounted side by side spaced out in the travel direction run out V-shaped from front to back forming a discharge gangway (22) for the potatoes at the rear end.

2. Multi-row potato harvester according to claim 1, characterised in that the open-web chains (5;6) are likewise V-shaped seen in plan view.

3. Multi-row potato harvester according to claim 1 or 2 characterised in that the adjoining haulm chains (7;17) are driven by the same drives with drive shafts mounted at an angle to each other.

4. Multi-row potato harvester according to one or more of claims 1 to 3 characterised in that the transverse conveyor devices for discharging the potatoes are transverse conveyor belts mounted beneath the rear ends of the open-web chains (6) and moving towards the discharge gangway (22).

## Revendications

1. Arracheuse de pommes de terre multi-rangs poussée, comprenant un dispositif d'arrachage (4; 14), des chaînes de transport de fanes (7; 17) disposées parallèlement, à intervalle l'une de l'autre, ainsi que des chaînes de criblage (5; 6) et, de plus, des dispositifs de transport transversal (8; 18) pour l'éjection des pommes de terre centralement, entre les chaînes de transport de fanes, ainsi qu'un dispositif de transport transversal (9; 19) au moins, pour la déviation des fanes de pommes de terre, en vue de les éjecter latéralement à côté des pommes de terre,
caractérisée par le fait que
les chaînes de transport de fanes (7; 17), disposées parallèlement à intervalle l'une de l'autre, contournent les chaînes de criblage (5; 6) ainsi que les dispositifs de transport tansversal (8; 18) pour l'éjection des pommes de terre et que les chaînes de transport de fanes (7; 17), disposées, dans le sens de marche, parallèlement, à distance l'une de l'autre, s'écartent l'une de l'autre, de l'avant en arrière, en forme de "V", formant une voie (22) recevant les pommes de terre éjectées à l'extrémité arrière.

2. Arracheuse de pommes de terre multi-rangs poussée selon la revendication 1,
caractérisée par le fait que
les chaînes de criblage (5; 6), vues d'en-dessus, sont également disposées en forme de "V".

3. Arracheuse de pommes de terre multi-rangs poussée selon la revendication 1 ou 2,
caractérisée par le fait que
les chaînes de transport de fanes (7; 17) voisines sont entraînées par les mêmes commandes, les arbres moteurs étant disposés angulairement par rapport l'un à l'autre.

4. Arracheuse de pommes de terre multi-rangs poussée selon l'une ou plusieurs des revendications 1 à 3,
caractérisée par le fait que
les dispositifs de transport transversal, éjectant les pommes de terre, sont des bandes de transport transversal, disposées sous les extrémités arrière des chaînes de criblage (6) et conduisant à la voie d'éjection (22).

FIG. 1

FIG. 2